# EUROPÄISCHE PATENTSCHRIFT

(11) **EP 2 699 192 B1**
(45) Veröffentlichungstag und Bekanntmachung des Hinweises auf die Patenterteilung: **04.03.2015**
(21) Anmeldenummer: 12720070.7
(22) Anmeldetag: 05.04.2012
(51) Int. Cl.: A61C 8/00

(54) **ZAHNPROTHESE**
DENTAL PROSTHESIS
PROTHÈSE DENTAIRE

(30) Priorität: 20.04.2011 AT 5602011
(43) Veröffentlichungstag der Anmeldung: 26.02.2014
(73) Patentinhaber: Redtenbacher Präzisionsteile Ges.m.b.H, 4644 Scharnstein (AT); Arnetzl, Gerwin Vincent, 8010 Graz (AT)
(72) Erfinder: BUCHEGGER, Harald, A-4817 St. Konrad (AT)
(74) Vertreter: Patentanwaltskanzlei Hübscher
(86) Internationale Anmeldenummer: PCT/AT2012/050045
(87) Internationale Veröffentlichungsnummer: WO 2012/142640

(56) Entgegenhaltungen:
- WO-A1-2009/106205
- DE-A1- 10 340 059
- US-A- 4 932 868

## Beschreibung

### Technisches Gebiet

Die Erfindung bezieht sich auf eine Zahnprothese mit einem Implantatkörper und mit einem in eine Aufnahme des Implantatkörpers einsetzbaren Abutment, das eine Durchgangsöffnung zur Aufnahme einer in ein Muttergewinde des Implantatkörpers eingreifenden Kopfschraube bildet, die sich mit einem konischen Kopfteil an einer konischen Schulter des Abutments abstützt.

### Stand der Technik

Zahnprothesen sind üblicherweise so aufgebaut, dass ein in den Kieferknochen eingesetzter Implantatkörper ein Abutment zum Aufbau des Zahnersatzes aufnimmt. Dieses Abutment wird mit Hilfe einer Kopfschraube mit dem Implantatkörper verbunden, die in eine Durchgangsöffnung des Abutments eingesetzt ist und in ein Muttergewinde des Implantatkörpers eingreift. Der Schraubenkopf stützt sich dabei an einer Ringschulter des Abutments ab, wobei die Forderung besteht, dass sich die Kopfschraube nicht unbeabsichtigt lösen kann und eine dichte Verbindung zum Abutment ermöglicht, sodass keine Bakterien zum Implantatkörper gelangen können. Um diesen Anforderungen zu entsprechen, ist es bekannt (DE 103 40 059 A1, DE 20 2006 013 585 U1), den Schraubenkopf mit einem konischen Kopfteil zu versehen, der sich an einer konischen Ringschulter abstützt. Obwohl sich durch diese konische Ausbildung der Stützflächen eine Verbesserung hinsichtlich der Abstützung des Schraubenkopfes gegenüber dem Abutment ergibt, können diese bekannten Schraubverbindungen den gestellten Anforderungen nur teilweise genügen.

Zur Stoßabsorbierung ist es darüber hinaus bekannt (US 4 932 868 A), das Abutment zweiteilig auszuführen und die beiden Teile über einen Gummiring gegeneinander abzustützen. Die gemeinsame Befestigung dieser beiden Abutmentteile an einem das Abutment mit dem Implantatkörper verbindenden Gelenk erfolgt über eine die beiden Abutmentteile durchsetzende Kopfschraube, die zwei in axialer Richtung aufeinanderfolgende Konusabschnitte mit unterschiedlichen Öffnungswinkeln aufweist. Die beiden Konusabschnitte der Kopfschraube wirken jeweils mit einer konischen Ringschulter der beiden Abutmentteile zusammen, wobei bei einer drucklosen Anlage des einen Konusabschnitts an der konischen Schulter des den Zahnersatz aufnehmenden Abutmentteils der andere Konusabschnitt mit Spiel in den Schulterkonus des anderen Abutmentteils eingreift, um beim Festziehen der Kopfschraube eine axiale Vorspannung auf den Gummiring zwischen den Abutmentteilen ausüben zu können.

Um die Dichtheit zwischen einem Abutment und einem Implantat verbessern zu können, ist es schließlich bekannt (WO 2009/106205 A1), den Konuswinkel des konischen Abutments gegenüber der konischen Aufnahme des Implantats unterschiedlich auszubilden, sodass sich im Berührungsbereich zwischen den Konusflächen ein hoher Berührungsdruck einstellt, der die Dichtheit dieser Verbindung verbessert.

### Darstellung der Erfindung

Der Erfindung liegt somit die Aufgabe zugrunde, eine Zahnprothese der eingangs geschilderten Art so auszugestalten, dass die Dichtheit der Verbindung zwischen dem Abutment und dem Implantatkörper gewährleistet und eine Selbstlösung der Schraubverbindung ausgeschlossen werden kann.

Die Erfindung löst die gestellte Aufgabe dadurch, dass der konische Kopfteil der Kopfschraube wenigstens zwei in axialer Richtung aufeinanderfolgende Konusabschnitte aufweist, die einen gegenüber der konischen Schulter unterschiedlichen Öffnungswinkel aufweisen, und dass bei einer drucklosen Anlage des einen Konusabschnitts an der konischen Schulter der andere Konusabschnitt mit Spiel in den Schulterkonus eingreift.

Durch das Vorsehen von wenigstens zwei in axialer Richtung aufeinanderfolgenden Konusabschnitten, die in Bezug auf die Konusschulter des Abutments unterschiedliche Durchmesser aufweisen, kommt es aufgrund der unterschiedlichen Öffnungswinkel der Konen einerseits der Schulter und anderseits der Konusabschnitte des Schraubenkopfs beim Anziehen der Kopfschraube dazu, dass zunächst der eine Konusabschnitt der Kopfschraube unter einer elastischen und plastischen Verformung der konischen Schulter des Abutments und des entsprechenden Konusabschnitts der Kopfschraube gegen die konische Schulter des Abutments gepresst wird, bevor der andere Konusabschnitt zur Anlage kommt und in weiterer Folge eine zusätzliche Dichtfläche zumindest unter einer elastischen Verformung der zusammenwirkenden Konusflächen bildet. Mit der dadurch bedingten zumindest zweistufigen Abdichtung des Schraubenkopfs gegenüber dem Abutment kann somit die geforderte Dichtheit der Schraubverbindung gewährleistet werden. Außerdem wird durch die plastische bzw. elastische Verformung der zusammenwirkenden Konusflächen der Reibungswiderstand so vergrößert, dass die Gefahr einer Selbstlösung der Schraubverbindung ausgeschlossen werden kann.

Besonders einfache Konstruktionsverhältnisse ergeben sich, wenn die beiden Konusabschnitte der Kopfschraube gleichen Konuswinkel aufweisen, was jedoch nicht notwendigerweise der Fall sein muss. Sind die Konuswinkel der Kopfschraube größer als der Konuswinkel der konischen Schulter, so ergeben sich die Dichtflächen vorteilhaft jeweils im Bereich des größten Durchmessers der beiden Konusabschnitte des konischen Kopfteils.

Zur Fertigung der beiden Konusabschnitte empfiehlt es sich, diese Konusabschnitte in einem axialen Abstand voneinander vorzusehen. Außerdem ergeben sich hinsichtlich der Dichtflächen beim Anziehen der Kopfschraube vorteilhafte Bedingungen, wenn bei Anlage des einen Konusabschnitts an der konischen Schulter der mit Spiel in den Schulterkonus eingreifende Konusabschnitt eine kürzere axiale Länge aufweist, weil ja bei angezogener Kopfschraube die Eingriffslänge dieses zunächst mit Spiel in den Schulterkonus eingreifenden Konusabschnitts des Schraubenkopfs entsprechend kürzer ist.

### Kurze Beschreibung der Zeichnung

In der Zeichnung ist der Erfindungsgegenstand beispielsweise dargestellt. Es zeigen
Fig. 1 eine erfindungsgemäße Zahnprothese in einem schematischen Längsschnitt und
Fig. 2 den konischen Kopfteil der Kopfschraube in einer vergrößerten Seitenansicht.

### Weg zur Ausführung der Erfindung

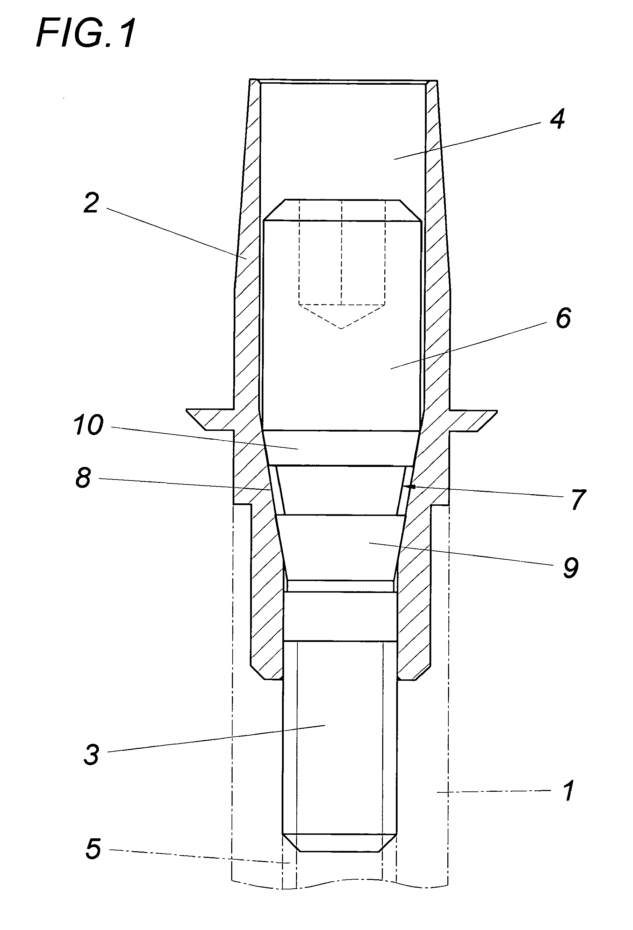

Die Zahnprothese gemäß Fig. 1 weist in herkömmlicher Art einen in den Kieferknochen einzusetzenden, strichpunktiert angedeuteten Implantatkörper 1 zur Aufnahme eines Abutments 2 für einen Zahnersatz auf. Dieses Abutment 2 wird mit Hilfe einer Kopfschraube 3 mit dem Implantatkörper 1 verbunden. Zu diesem Zweck ist das Abutment 2 mit einer Durchgangsöffnung 4 versehen, in die die in ein Muttergewinde 5 eingreifende Kopfschraube 3 eingesetzt ist. Der Schraubenkopf 6 weist einen konischen Kopfteil 7 auf, der mit einer konischen Schulter 8 des Abutments 4 zusammenwirkt und über diese konische Schulter 8 das Abutment 2 in seine Aufnahme im Implantatkörper 1 drückt.

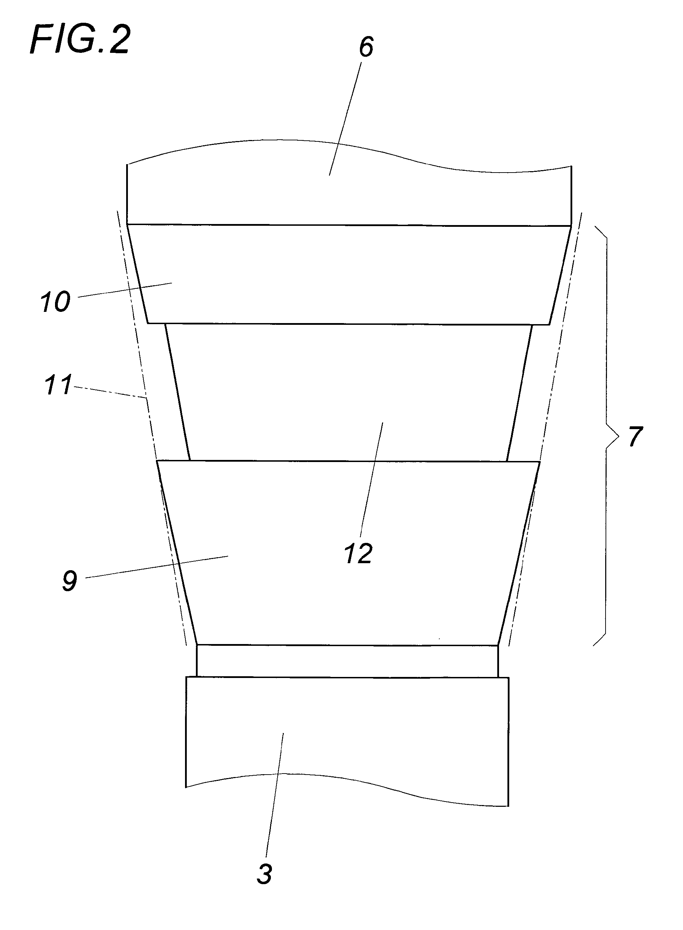

Wie sich insbesondere aus der Fig. 2 entnehmen lässt, umfasst der konische Kopfteil 7 zwei in axialer Richtung aufeinanderfolgende Konusabschnitte 9 und 10. Diese Konusabschnitte 9 und 10 weisen zwar einen übereinstimmenden Konuswinkel auf, doch liegen die Konusspitzen in einem axialen Abstand voneinander auf der Schraubenachse, sodass der eine Konusabschnitt 9 bereits am strichpunktiert angedeuteten Schulterkonus 11 der konischen Schulter 8 des Abutments 2 anschlägt, während der andere Konusabschnitt 10 noch ein Spiel gegenüber dem Schulterkonus 11 besitzt. Da der Konuswinkel der Konusabschnitte 9, 10 unterschiedlich zum Konuswinkel des Schulterkonus 11 gewählt ist - und zwar wird der Konuswinkel der Konusabschnitte 9, 10 vorzugsweise größer als der Konuswinkel des Schulterkonus 11 gewählt -, drückt sich der Konusabschnitt 9 beim Anziehen der Kopfschraube 3 unter einer in den plastischen Bereich erstreckenden Verformung der konischen Schulter 8 und des Konusabschnitts 9 zunächst im Bereich des größten Durchmessers in die konische Schulter 8 ein, bevor der Konusabschnitt 10 zur Wirkung kommt und unter einer zumindest elastischen Verformung der Konusflächen eine zweite Dichtfläche bildet.

Durch ein Abstimmen der Konuswinkel aufeinander und auf die jeweiligen Materialeigenschaften können somit vorteilhafte Bedingungen für die Schraubverbindung zwischen dem Abutment 2 und dem Implantatkörper 1 erhalten werden. Übliche Konuswinkel liegen in einem Bereich zwischen 10 und 30°, wobei der Unterschied der Konuswinkel einerseits für die konische Schulter 8 und anderseits für den konischen Kopfteil 7 im Bereich von 1 bis 5° liegen kann. Das Spiel zwischen dem Konusabschnitt 10 und dem Schulterkonus 11 bei einer drucklosen Anlage des Konusabschnitts 9 am Schulterkonus 11 soll dabei im Allgemeinen 0,1 mm nicht übersteigen. Diese Werte sind jedoch nicht einschränkend und können im Bedarfsfall über- bzw. unterschritten werden. Wie dem Ausführungsbeispiel zu entnehmen ist, sind die Konusabschnitte 9 und 10 im axialen Abstand voneinander angeordnet, wobei sich zwischen diesen Abschnitten 9 und 10 ein einspringender Kopfabschnitt 12 ergibt, der die Fertigung der Konusabschnitte 9 und 10 erleichtert. Im dargestellte Ausführungsbeispiel sind die Konuswinkel der beiden Konusabschnitte 9 und 10 aus Konstruktionsgründen gleich groß gewählt. Dies ist jedoch keineswegs zwingend. Im Gegenteil, mit unterschiedlichen Konuswinkeln kann unter Umständen die Dichtwirkung und Selbsthemmung der Schraubverbindung verbessert werden.

## Patentansprüche

1. Zahnprothese mit einem Implantatkörper (1) und mit einem in eine Aufnahme des Implantatkörpers (1) einsetzbaren Abutment (2), das eine Durchgangsöffnung (4) zur Aufnahme einer in ein Muttergewinde (5) des Implantatkörpers (1) eingreifenden Kopfschraube (3) bildet, die sich mit einem konischen Kopfteil (7) der Kopfschraube (3) an einer konischen Schulter (8) des Abutments (2) abstützt, **dadurch gekennzeichnet, dass** der konische Kopfteil (7) wenigstens zwei in axialer Richtung aufeinanderfolgende Konusabschnitte (9, 10) aufweist, die einen gegenüber der konischen Schulter (8) unterschiedlichen Öffnungswinkel aufweisen, und dass bei einer drucklosen Anlage des einen Konusabschnitts (9) an der konischen Schulter (8) der andere Konusabschnitt (10) mit Spiel in den Schulterkonus (11) eingreift.

2. Zahnprothese nach Anspruch 1, **dadurch gekennzeichnet, dass** die beiden Konusabschnitte (9, 10) der Kopfschraube (3) gleichen Konuswinkel aufweisen.

3. Zahnprothese nach Anspruch 1 oder 2, **dadurch gekennzeichnet, dass** die Konuswinkel der Kopfschraube (3) größer als der Konuswinkel der konischen Schulter (8) sind.

4. Zahnprothese nach einem der Ansprüche 1 bis 3, **dadurch gekennzeichnet, dass** die beiden Konusabschnitte (9, 10) mit einem axialen Abstand aufeinanderfolgen.

5. Zahnprothese nach einem der Ansprüche 1 bis 4, **dadurch gekennzeichnet, dass** bei Anlage des einen Konusabschnitts (9) an der konischen Schulter (8) der mit Spiel in den Schulterkonus (11) eingreifende Konusabschnitt (10) eine kürzere axiale Länge aufweist.

## Claims

1. Dental prosthesis, comprising an implant body (1) and an abutment (2) which can be inserted into a receiver of the implant body (1) and forms a passage opening (4) for accommodating a cap screw (3) which engages in an internal thread (5) of the implant body (1) and is supported by means of a conical cap part (7) of the cap screw (3) on a conical shoulder (8) of the abutment (2), **characterised in that** the conical cap part (7) has at least two conical sections (9, 10) which follow one another in the axial direction and which have an opening angle that differs from the conical shoulder (8), and **in that** when one conical section (9) contacts the conical shoulder (8) without pressure the other conical section (10) engages in the shoulder cone (11) with play.

2. Dental prosthesis as claimed in claim 1, **characterised in that** the two conical sections (9, 10) of the cap screw (3) have the same cone angle.

3. Dental prosthesis as claimed in claim 1 or 2, **characterised in that** the cone angles of the cap screw (3) are larger than the cone angle of the conical shoulder (8).

4. Dental prosthesis as claimed in any one of claims 1 to 3, **characterised in that** the two conical sections (9, 10) follow one another at an axial distance.

5. Dental prosthesis as claimed in any one of claims 1 to 4, **characterised in that** when one conical section (9) contacts the conical shoulder (8) the conical section (10) engaging with play in the shoulder cone (11) has a shorter axial length.

## Revendications

1. Prothèse dentaire avec un corps d'implant (1) et avec un moyen d'ancrage (2) pouvant être inséré dans un logement du corps d'implant (1), qui forme une ouverture de passage (4) pour loger une vis à tête (3) en prise dans un écrou taraudé (5) du corps d'implant (1), qui prend appui avec une partie de tête (7) conique de la vis à tête (3) au niveau d'un épaulement (8) conique du moyen d'ancrage (2), **caractérisée en ce que** la partie de tête (7) conique présente au moins deux sections coniques (9, 10) se succédant dans le sens axial, qui présentent un angle d'ouverture différent par rapport à l'épaulement (8) conique, et **en ce que** lors d'un placement sans pression d'une section conique (9) au niveau de l'épaulement (8) conique, l'autre section conique (10) vient en prise avec jeu dans le cône d'épaulement (11).

2. Prothèse dentaire selon la revendication 1, **caractérisé en ce que** les deux sections coniques (9, 10) de la vis à tête (3) présentent le même angle conique.

3. Prothèse dentaire selon la revendication 1 ou 2, **caractérisée en ce que** les angles coniques de la vis à tête (3) sont plus grands que l'angle conique de l'épaulement (8) conique.

4. Prothèse dentaire selon l'une des revendications 1 à 3, **caractérisée en ce que** les deux sections coniques (9, 10) se succèdent avec un espacement axial.

5. Prothèse dentaire selon l'une des revendications 1 à 4, **caractérisée en ce que** lors du placement d'une section conique (9) au niveau de l'épaulement (8) conique, la section conique (10) venant en prise avec jeu dans le cône d'épaulement (11) présente une longueur axiale plus courte.
